# EUROPÄISCHE PATENTSCHRIFT

(11) **EP 1 887 323 B1**
(45) Veröffentlichungstag und Bekanntmachung des Hinweises auf die Patenterteilung: **30.09.2015**
(21) Anmeldenummer: 07007841.5
(22) Anmeldetag: 17.04.2007
(51) Int. Cl.: G01D 5/24

(54) **Bedienelement und Verfahren zur Eingabe von Werten an einem medizinischen Gerät**
Operating element and method for input of values in a medical device
Elément de commande et procédé de saisie de valeurs sur un appareil médical

(30) Priorität: 10.08.2006 DE 102006037545
(43) Veröffentlichungstag der Anmeldung: 13.02.2008
(73) Patentinhaber: Ferton Holding SA, 2800 Delemont (CH)
(72) Erfinder: Hartl, Stefan, 1196 Gland (CH)
(74) Vertreter: Müller Schupfner & Partner Patent- und Rechtsanwaltspartnerschaft mbB

(56) Entgegenhaltungen:
- EP-A2- 1 273 851
- DE-A1- 10 313 401
- DE-A1-102005 002 952
- US-A- 5 952 998
- US-A1- 2003 076 306
- US-B1- 6 468 212
- "OPTICAL SLIDER", INTERNET CITATION, 25. Oktober 2004 (2004-10-25), XP002371685, Gefunden im Internet: URL:www.mechaless.de/eng/app_opt_schieber_ e.htm [gefunden am 2006-03-13]

## Beschreibung

Die vorliegende Erfindung betrifft ein Bedienelement und ein Verfahren zur Eingabe von Werten an einem medizinischen Gerät nach den unabhängigen Patentansprüchen 1 und 7. Darüber hinaus betrifft die Erfindung ein medizinisches Gerät, das mit einem solchen Bedienelement ausgestattet ist und mit Hilfe dessen das erfindungsgemäße Verfahren ausgeführt werden kann.

Im Stand der Technik ist es bekannt, Werte und Parameter an medizinischen Geräten wie Injektionsgeräten, chirurgischen Geräten, Beatmungsgeräten oder bei Dentalgeräten mittels Hebeln, Tasten oder Drehknöpfen einzugeben, um beispielsweise die Zuführung von Medikamenten oder Atemluft oder die Geschwindigkeit eines Bohrers zu regeln. Ein Nachteil dieser Bedienelemente besteht darin, dass sich Schmutz und Bakterien an den Grenzflächen zwischen den Bedienelementen, wie Tasten oder Schaltern und der Oberfläche des medizinischen Geräts ansammelt, wodurch eine zuverlässige Reinigung und Desinfektion dieser Oberflächen erschwert bzw. erheblich eingeschränkt wird.

Darüber hinaus lassen sich mit den herkömmlichen Schaltern, Hebeln, Druck- oder Drehknöpfen nur einzelne Funktionen des medizinischen Geräts ansteuern, d.h. man kann beispielsweise die Drehzahl eines Bohrers mit Hilfe eines entsprechenden Drehknopfs einstellen, nicht aber die gleichzeitige Zufuhr von Kühlflüssigkeit.

Ein weiterer Nachteil der herkömmlichen Bedienelemente besteht darin, dass eine Verstellung des aktuellen Werts nur linear erfolgt und der Arzt bei Veränderung eines aktuellen Werts zunächst den entsprechenden Hebel oder Drehknopf des Bedienelements an genau derjenigen Stelle anfassen muss, an der sich der aktuelle Wert befindet, um den Hebel oder den Knopf dann an diejenige Stelle zu bewegen bzw. zu drehen, an der der einzustellende Wert liegt und der vom Arzt gewünscht wird. Der Arzt wird daher bei Bedienung des medizinischen Geräts von seiner eigentlichen Tätigkeit, d.h. beispielsweise bei einem chirurgischen Eingriff oder bei einer Zahnoperation, abgelenkt.

Schließlich sind herkömmliche Bedienelemente oft schlecht ablesbar und es besteht die Gefahr, dass sich Kurzschlüsse im Gerät durch die mit dem Innenraum der Geräte gekoppelten Bedienelemente auf die Bedienperson übertragen und diese ggf. verletzen.

Darüber hinaus ist es im Stand der Technik bekannt, berührungsempfindliche ("berührungsempfindlich" schließt dabei auch solche Sensoren ein, die die An- oder Abwesenheit eines Bedienmittels über eine bestimmte Distanz, auch durch Oberflächen hindurch detektieren) Sensoren zur Eingabe von Werten bei elektrischen oder elektronischen Geräten vorzusehen, die durch die kapazitive Erfassung der Fingerposition einer Bedienperson oberhalb eines Parameterfeldes einen Kontaktwert erzeugen, der einen bestimmten einzustellenden Wert an das Gerät weiterleitet, abhängig von der jeweiligen Position des Fingers auf dem Bedienfeld (vgl. verschiedene Produkte der Firma Quantum Research Group: www.qprox.com).

Die US 5,952,998 offenbart einen Computer mit einem LCD-Display zur Anzeige von Statusinformationen des Computers.

Die EP 1 273 851 A2 betrifft eine Stelleinheit für Gargeräte. Die Stelleinheit weist einen berührungsempfindlichen Stellstreifen auf, dessen Stellabschnitten Stellwerte oder Stellwertbereiche einer vorbestimmten Stellkurve zugeordnet oder wahlweise zuordenbar sind.

XP002371685 (Optical Slider, internet citation, 25. Oktober 2004), betrifft verschiedene optische Bedienelemente, welche beispielsweise mit einem Finger bedient werden können.

Die DE 10 2005 002 952 A1 betrifft einen berührempfindlichen Gleitstreifen, gekennzeichnet durch ein von einer Fingernut gebildetes Führungsmittel, innerhalb dessen der Gleitstreifen zumindest teilweise angeordnet ist.

Die US 2003/0076306 A1 betrifft ein Abspielgerät mit einem Touch Pad. Mit dem Touch Pad ist es möglich, zu scrollen.

Die DE 103 13 401 A1 betrifft einen näherungssensitiven Drehschalter, der aus einzelnen Sensorflächen besteht, die auf einem Substrat räumlich zueinander angeordnet sind und die über eine Auswerteelektronik miteinander verschaltet sind. Die US 6,468,212 B1 offenbart eine virtuelle Benutzerschnittstelle für ein Ultraschallgerät.

Der vorliegenden Erfindung liegt nun die Aufgabe zugrunde, die vorbeschriebenen Nachteile des Stands der Technik im Medizinbereich zu überwinden, d.h. ein Bedienelement und ein Verfahren zur Eingabe von Werten an einem medizinischen Gerät anzugeben, das leicht zu reinigen und hygienisch ist, eine einfache und leichte Einstellbarkeit der Bedienparameter ermöglicht und eine Multifunktionalität realisiert, die es erlaubt, unterschiedliche Steuersignale mit Hilfe eines Bedienelements zu erzeugen.

Die Erfindung löst diese Aufgaben durch die kennzeichnenden Merkmale der unabhängigen Patentansprüche 1, 7 und 11. Vorteilhafte Ausgestaltungen sind in den Unteransprüchen gekennzeichnet und beansprucht.

Nach der vorliegenden Erfindung weist das Bedienelement zur Eingabe von Werten an einem medizinischen Gerät einen oder mehrere berührungsempfindliche Sensoren auf, die unterhalb einer eine Bedienfläche bildenden Abdeckung angebracht sind und die die An- oder Abwesenheit eines Bedienmittels bzw. dessen Position detektieren. Je nach An- bzw. Abwesenheit und/oder Position des Bedienmittels relativ zum berührungsempfindlichen Sensor wird mittels des Sensors ein Kontaktwert generiert, der zur Veränderung des aktuellen Werts einer bestimmten Funktionseinheit des medizinischen Geräts dient. Dabei wird der aktuelle Wert durch eine Anzeige des Bedienelements angezeigt und mittels des Kontaktwerts des Sensors auf einen einzustellenden Wert verändert.

Der Vorteile der vorliegenden Erfindung liegt insbesondere darin, dass zwischen dem Bedienmittel und dem Sensor eine Abdeckung anbringbar ist, die es zwar dem Sensor ermöglicht, die An- oder Abwesenheit bzw. die Position des Bedienmittels zu detektieren, gleichzeitig aber Verschmutzungen und Bakterien vom Sensor, d.h. von dem Einstellmittel abhält, so dass die Bedienoberfläche des medizinischen Geräts leicht gereinigt und desinfiziert werden kann.

Darüber hinaus hat diese Ausbildung des Bedienelements den Vorteil, dass ein und dieselbe Bedienfläche für unterschiedliche Funktionseinheiten des medizinischen Geräts herangezogen werden kann abhängig davon, welche Funktionseinheit der Bedienfläche zugeordnet wird. So ist es beispielsweise möglich, eine längliche Bedienfläche mit einer Anzahl von längs der Bedienfläche angeordneten, berührungsempfindlichen Sensoren auszustatten, die die Position des Fingers einer Bedienperson detektieren und in Abhängigkeit von der Lage des detektierenden Sensors im Verhältnis zu einem minimalen oder einen maximalen Wert ein Steuersignal an beispielsweise den Motor eines Dentalbohrers senden, der dann in Abhängigkeit von der Sensorposition eine bestimmte Drehzahl ansteuert. Durch Berührung eines Umschaltsensors kann die länglich ausgebildete Bedienfläche dann der Drucksteuerung eines Kühlmittels zugeordnet werden, so dass das erneute Antippen eines bestimmten Sensors längs der länglichen Bedienfläche einen bestimmten Druck für den Zulauf des Kühlmittels beim Bohren ansteuert.

Möchte der Arzt jedoch auf das Umschalten verzichten, so kann er vor Beginn des Bohrens einen weiteren Umschaltsensor berühren, so dass die längliche Bedienfläche beiden Funktionseinheiten gleichzeitig zugeordnet wird, so dass er dann während der Operation lediglich auf eine bestimmte Stelle längs der länglichen Bedienfläche zu tippen oder diese zu Berühren hat, wodurch gleichzeitig eine bestimmte Bohrerdrehzahl und ein bestimmter Druck für die Zuleitung der Kühlflüssigkeit eingestellt wird.

Die Bedienfläche bildende Abdeckung ist derart ausgebildet bzw. angebracht, dass ein Transport von Feuchtigkeit vom Bedienmittel zum Sensor nicht möglich ist. Beispielsweise kann die Abdeckung eine dünne Plastikfolie oder eine dünne Plastikabdeckung sein, die sich vollständig über den oder die Sensoren an der Bedienseite eines medizinischen Geräts erstreckt. Dies erleichtert die Reinigung und Sterilisierung des Geräts wesentlich.

Mit Vorteil ist der berührungsempfindliche Sensor dabei ein kapazitiver Sensor, der unterhalb einer die Bedienfläche bildenden Abdeckung, wie beispielsweise einer Glasplatte oder einer Kunststoffbeschichtung, angebracht ist, wobei das Bedienmittel mit Vorteil der Finger einer menschlichen Hand ist. Des Weiteren kann die Bedienfläche sowohl punktförmig als auch linienförmig oder kreisförmig ausgebildet sein, je nach dem, welche Funktionseinheit des medizinischen Geräts angesteuert werden soll. Die Anzeige des Bedienelements zeigt dabei den aktuellen Wert auch während der Einstellung nach einer besonderen Ausführungsform der vorliegenden Erfindung kontinuierlich oder diskret an, wobei auf oder neben der Bedienfläche mit Vorteil auch Markierungen angebracht sind, die die einzustellenden Werte oder die zu bedienende Funktionseinheit angeben. Nach einer bevorzugten Ausführungsform der vorliegenden Erfindung befinden sich neben oder zwischen den Sensoren Leuchtdioden (LED), die in Abhängigkeit von dem eingestellten Wert entweder einzeln oder gemeinschaftlich, beginnend von einem minimalen Wert, bis hin zu dem aktuellen Wert leuchten. Zur Einstellung des einzustellenden Werts reicht es aus, das Bedienmittel, wie beispielsweise den Finger einer Hand, an eine beliebige Position der Bedienfläche zu setzen oder dahin zu verschieben. Die Art und Weise der Einstellung des einzustellenden Werts wird nachfolgend anhand einer Beschreibung des erfindungsgemäßen Verfahrens näher erläutert:
Gemäß dem erfindungsgemäßen Verfahren zur Eingabe von Werten an einem medizinischen Gerät wird ein unterhalb einer eine Bedienfläche bildenden Abdeckung angebrachter berührungsempfindlicher Sensor aktiviert, um die An- oder Abwesenheit eines Bedienmittels bzw. dessen Position relativ zum Sensor zu detektieren und um einen Kontaktwert zu generieren. Mit Hilfe dieses Kontaktwerts, der ein Maß für die Position des Bedienmittels darstellt, wird ein aktueller Wert verändert. Diese Veränderung erfolgt anhand unterschiedlicher Einstellarten:

### 1. Absolute Einstellung

Bei der Einstellart der absoluten Einstellung wird der Kontaktwert durch Antippen des einzustellenden Werts auf der Bedienfläche generiert und der aktuelle Wert wird unmittelbar auf den einzustellenden Wert gesetzt. Es reicht daher aus, dass die Bedienperson des medizinischen Geräts die Bedienfläche an genau derjenigen Position kurz antippt, auf die der aktuelle Wert unmittelbar und sofort eingestellt werden soll.

### 2. Relative Einstellung

Nach einer zweiten bevorzugten Einstellart wird der aktuelle Wert kontinuierlich durch Berührung der Bedienfläche an einer beliebigen Stelle in Richtung des Kontaktwerts verändert, bis der aktuelle Wert entweder den Kontaktwert erreicht hat oder bis der Kontaktwert durch Abwesenheit des Bedienmittels rückgesetzt wird. Befindet sich der aktuelle Wert beispielsweise in der Nähe des minimalen Werts und wird der Finger einer Bedienperson beispielsweise in die Nähe des maximalen Werts gesetzt, so beginnt sich der aktuelle Wert ab dem Zeitpunkt des Berührens kontinuierlich in Richtung des Kontaktwerts zu verändern und erreicht diesen auch, wenn der Finger der Bedienperson nicht wieder von der Bedienfläche abgehoben wird. Andernfalls bleibt der aktuelle Wert an genau derjenigen Stelle, an der er sich zum Zeitpunkt des Abhebens des Fingers der Bedienperson befindet.

### 3. Dynamische Einstellung

Nach einer dritten bevorzugten Ausführungsform der vorliegenden Erfindung wird der aktuelle Wert kontinuierlich durch Streichen des Bedienmittels über die Bedienfläche in eine Stellrichtung verändert, bis der Kontaktwert durch Abwesenheit des Bedienmittels rückgesetzt wird. In diesem Fall streicht der Benutzer mit seinem Finger über das Bedienfeld ohne vorher darauf zu achten, an welcher Position sich der aktuelle Wert gerade befindet. Das Streichen über das Bedienfeld erfolgt auch unabhängig von der Position des Fingers beim Beginn des Streichens, so dass sich der aktuelle Wert in die Richtung des streichenden Finders verändert, bis der Finger entweder abgehoben wird oder an einer bestimmten Position stehen bleibt. In diesem Fall verändert sich der aktuelle Wert nicht weiter, d.h. er wandert insbesondere nicht weiter in Richtung des generierten Kontaktwerts, sondern verbleibt an Ort und Stelle.

Nach einer abgewandelten Ausführungsform der dynamischen Einstellung verändert sich die Veränderungsgeschwindigkeit des aktuellen Werts bei Beschleunigung der Streichbewegung des Bedienmittels. Je schneller der Benutzer mit seinem Finger über die Bedienfläche streicht, desto schneller verändert sich auch der aktuelle Wert in die Stellrichtung des Bedienmittels (Finger, Zeigestift u.ä.).

Nach einer weiteren bevorzugten Ausführungsform der vorliegenden Erfindung wird der aktuelle Wert unterhalb oder neben der Bedienfläche kontinuierlich oder schrittweise mittels einer Anzeige angezeigt und insbesondere unabhängig von der Stelle der An- oder Abwesenheit des Bedienmittels verändert.

Eine vorteilhafte Ausführungsform der vorliegenden Erfindung wird mittels der beigefügten Zeichnungen näher erläutert. Dabei zeigen:
- Figur 1: ein dentalmedizinisches Gerät mit drei Bedienelementen nach der vorliegenden Erfindung,
- Figur 1a: einen schematischen Schnitt durch ein erfindungsgemäßes Bedienelement,
- Figur 2: eine schematische Darstellung einer ersten bevorzugten Ausführungsform des erfindungsgemäßen Bedienelements, und
- Figur 3: eine zweite bevorzugte Ausführungsform des erfindungsgemäßen Bedienelements.

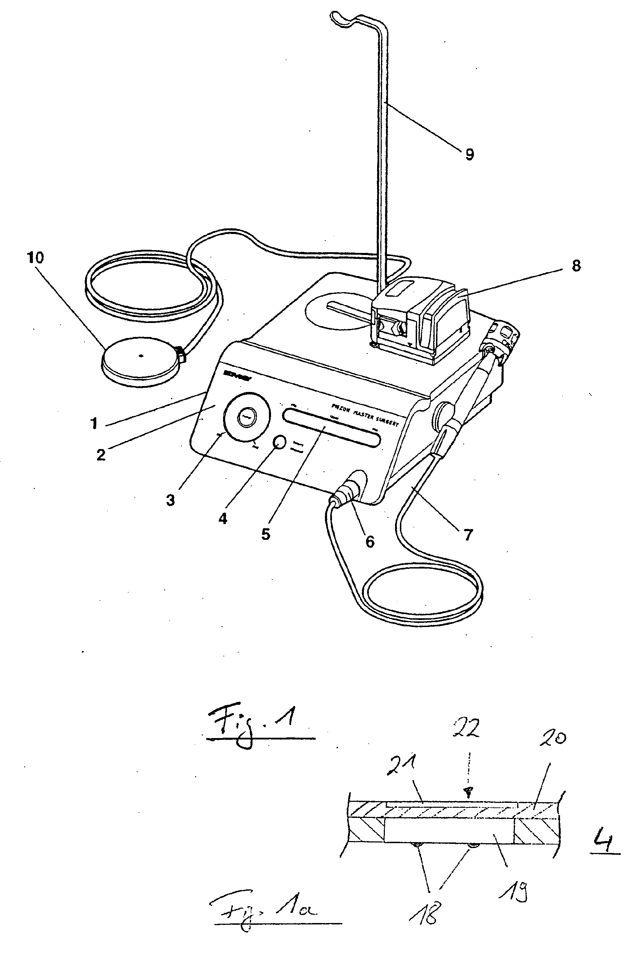

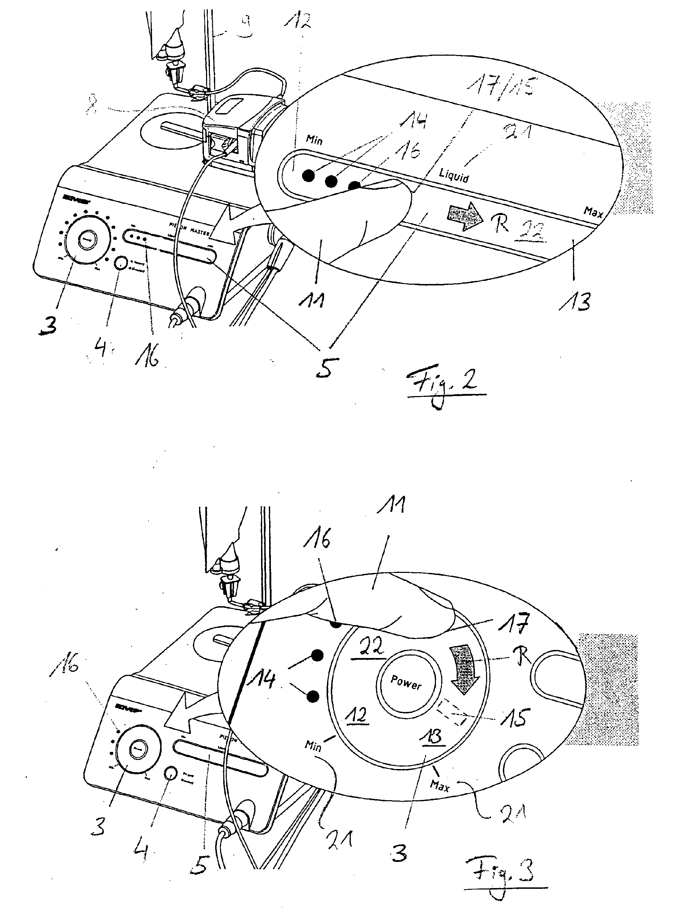

Figur 1 zeigt ein dental-medizinisches Gerät 1 zur Prophylaxebehandlung von Zähnen. Hierfür wird eine sich an einem Handteil befindliche Metallspitze piezokeramisch zu Schwingungen angeregt, um schadhaften Zahnbelag von der Zahnoberfläche zu entfernen. Zu diesem Zweck wird über ein Anschlussstück 6 elektrische Energie zur Ansteuerung des Ultraschallhandteils 7 eingespeist, parallel dazu wird eine spezielle Kühlflüssigkeit (Fig.2) auf einem Ständer 9 in einem Beutel bereit gestellt und über eine Pumpe 8 mittels eines geeigneten Schlauchs (Fig.2) dem Handteil 7 zugeführt. Zur Steuerung der Ultraschallfrequenz befindet sich auf dem Bedienfeld 2 ein erstes Bedienelement 3, das rotationssymmetrisch, d.h. kreisförmig ausgebildet ist. Darüber hinaus befindet sich auf dem Bedienfeld 2 ein zweites Bedienelement 4, das punktförmig ausgebildet ist und das beispielsweise zum Umschalten des dritten Bedienelements 5, zum Ein- oder Ausschalten des Geräts 1 oder für andere Funktionen vorgesehen ist. Schließlich befindet sich auf dem Bedienfeld 2 ein drittes längliches Bedienelement 5, das zur Steuerung des Flüssigkeitszuflusses dient. Natürlich sind auch andere Formen von Bedienfeldern möglich. Alle Bedienfelder 3, 4, 5 haben jedoch die in Figur 1a schematisch gezeigten Berührungssensoren 19 gemein, die unterhalb einer bevorzugt dielektrischen Abdeckung 20 befestigt sind und Kontakte 18 aufweisen, mit Hilfe derer ein Kontaktwert 17 ausgelesen werden kann, der Aufschluss gibt über die Position des Bedienmittels 11. Innerhalb der dielektrischen Abdeckung 20 können Markierungen 21 eingebracht oder aufgebracht sein, die der Bedienperson Minimal- oder Maximalwerte vorgeben oder dazwischen liegende Werte wie beispielsweise 1,2,3 .... 10.

Schließlich dient ein Fußschalter 10 beispielsweise zum Ein- und Abschalten des Ultraschallgeräts oder der Funktion des Handteils.

Figur 2 zeigt eine erste bevorzugte Ausführungsform der vorliegenden Erfindung im vergrösserten Maßstab. Ein am Ständer 9 befestigter Flüssigkeitsbehälter liefert über die Pumpe 8 Flüssigkeit an das Handteil 7, wobei die Pumpe 8 über das dritte Bedienfeld 5 steuerbar ist. Wie in Figur 2 ersichtlich, befindet sich hinter dem Bedienelement 5 neben den berührungsempfindlichen Sensoren 19 (nicht dargestellt) eine Anzeige 14, in diesem Fall Leuchtdioden, die ausgehend von einem minimalen Wert 12 bis hin zu einem maximalen Wert 13 einen aktuellen Wert 16 anzeigen, der ein Maß für die zugeführte Flüssigkeit darstellt. Durch Berühren eines einzustellenden Werts 15 mittels eines Bedienmittels 11, wie beispielsweise einem menschlichen Finger, wird mittels der hinter dem Bedienelement 5 befindlichen Sensoren 19 ein Kontaktwert 17 generiert, der eine Veränderung des aktuellen Werts 16 veranlasst.

Figur 3 zeigt eine weitere vorteilhafte Ausgestaltung eines ersten Bedienelements 3, das kreisförmig ausgebildet ist. In diesem Fall befindet sich die Anzeige 14 neben der Bedienfläche 22, die die Anordnung der berührungsempfindlichen Sensoren 19 (nicht dargestellt) angibt. Wie in Figur 3 dargestellt, generieren die Berührungssensoren 19 aufgrund der Berührung mit einem Finger einen Kontaktwert 17, der den aktuellen Wert 16 veranlasst sich zu verändern. Diese Veränderung erfolgt in unterschiedliche Ausgestaltung:

Wie in Figur 2 gezeigt, wird durch Antippen der Bedienfläche 22 ein Kontaktwert 17 generiert, der eine unmittelbare Veränderung des aktuellen Werts 16 zur Folge hat, der sich unmittelbar auf den Kontaktwert 17 einstellt, der auch gleichzeitig den einzustellenden Wert 15 angibt. Alternativ hierzu wird der aktuelle Wert 16 kontinuierlich in Richtung des Kontaktwerts 17 verändert, wenn der Finger 11 auf der Bedienfläche 22 belassen wird, bis entweder der aktuelle Wert 16 den Kontaktwert 17 erreicht hat oder bis der Finger wieder von der Bedienfläche 22 abgehoben wird, wodurch der aktuelle Wert 16 dann an derjenigen Stelle stehen bleibt, an der er sich zum Zeitpunkt des Abhebens des Fingers befindet.

Alternativ dazu kann, wie in Figur 3 gezeigt, der Finger 11 auch kreisförmig längs der Bedienfläche 22 in Richtung der Stellrichtung R bewegt werden, wodurch sich parallel zu der Stellrichtung R auch der aktuelle Wert 16 verändert, bis dieser den einzustellenden Wert 15 erreicht hat. In diesem konkret dargestellten Fall wäre der Finger 11 dann etwa auf der Position des minimalen Werts 12. Es ist also nicht notwendig, dass der Finger 11 genau an derjenigen Stelle angesetzt wird, an der sich der aktuelle Wert 16 befindet.

Das Bedienelement der vorliegenden Erfindung hat bei verblüffend einfacher Ausgestaltung mehrere besonders im Medizinbereich notwendige Vorteile:
Es befinden sich keine elektrischen Bauteile an der Bedienoberfläche. Da keinerlei Mechanik bewegt werden muss, ergibt sich auch kein Verschleiß der Ansteuerung. Die Bedienoberfläche ist praktisch beliebig gestaltbar, die Software ermöglicht eine völlig andere Ansteuerung bzw. Funktionalität der einzelnen Bedienelemente. Durch die glatte Oberfläche lässt sich diese problemlos reinigen und desinfizieren. Die Bedienung ist auch mit Operationshandschuhen problemlos möglich, die gewünschten Einstellungen werden schnell erreicht und sind -je nach gusto des Arztes- direkt ansteuerbar. Auch relative Änderungen können den aktuellen Wert verändern, so dass der Arzt an beliebigen Positionen des Bedienelements eine Veränderung bewirken kann. Durch die Ein-Finger-Bedienung ist eine Einstellung auch mit einem Instrument in der Hand möglich. Alle Einstellungen sind sehr leicht ablesbar.

Alternativ zu den vorbeschriebenen Ausführungsformen ist es auch möglich, die Bedienfläche 22 abzusenken, d.h. nutförmig auszubilden, um es der Bedienperson zu erleichtern, die genaue Position der berührungsempfindlichen Sensoren 19 zu erreichen, wodurch die Anordnung der Markierungen 21 unterstützt wird. Gleichermaßen ist es möglich, die Funktionalität des Antippens bzw. des kontinuierlichen Berührens der Bedienfläche 22 umzukehren, d.h., dass eine kontinuierliche Verstellung des aktuellen Werts 16 beim Antippen erfolgt (und durch nochmaliges Antippen beendet wird), während ein kontinuierliches Berühren der Bedienfläche 22 für beispielsweise eine Mindestzeit von 0,5 Sekunden zu einem sofortigen Umstellen des aktuellen Werts 16 auf den Kontaktwert 17 zur Folge hat. Auch ist eine Umstellung der Funktionalität eines Bedienelements beispielsweise durch "Doppelklick", d.h. durch schnelles hintereinander Antippen des Bedienfelds möglich.

## Patentansprüche

1. Medizinisches Gerät mit mindestens einem Bedienelement zur Eingabe von Werten, mit einem berührungsempfindlichen Sensor (19) und einer Bedienfläche (22), wobei der Sensor (19) unterhalb einer die Bedienfläche (22) bildenden Abdeckung (20) angebracht ist, die An- oder Abwesenheit eines Bedienmittels (11) detektiert und einen Kontaktwert (17) generiert,wobei eine Anzeige (14) des Bedienelements einen aktuellen Wert (16) anzeigt, der mittels des Kontaktwerts (17) des Sensors (19) auf einen einzustellenden Wert (15) veränderbar ist,**dadurch gekennzeichnet,dass** das medizinische Gerät entweder den aktuellen Wert (16) kontinuierlich durch Berührung der Bedienfläche (22) an einer beliebigen Stelle in Richtung des Kontaktwerts (17) verändert, bis der aktuelle Wert (16) den Kontaktwert (17) erreicht hat oder bis der Kontaktwert (17) durch Abwesenheit des Bedienmittels (11) zurückgesetzt wird,
oder
den aktuellen Wert (16) kontinuierlich durch Streichen des Bedienmittels (11) über die Bedienfläche (22) in eine Stellrichtung (R) verändert, bis der Kontaktwert (17) durch Abwesenheit des Bedienmittels (11) zurückgesetzt wird, unabhängig von der Position des Bedienmittels (11) beim Beginn des Streichens.

2. Medizinisches Gerät nach Anspruch 1,**dadurch gekennzeichnet,dass** der berührungsempfindliche Sensor (19) ein kapazitiver Sensor ist, der unterhalb einer dielektrischen Abdeckung (20) angebracht ist, und dass das Bedienmittel (11) ein menschlicher Finger ist.

3. Medizinisches Gerät nach einem der Ansprüche 1 oder 2,
**dadurch gekennzeichnet,**
**dass** die Bedienfläche (22) punktförmig, linienförmig oder kreisförmig ausgebildet ist.

4. Medizinisches Gerät nach einem der vorhergehenden Ansprüche,
**dadurch gekennzeichnet,**
**dass** die Anzeige (14) den aktuellen Wert (16) auch während der Einstellung kontinuierlich anzeigt und/oder dass auf oder neben der Bedienfläche (22) Markierungen (21) angebracht sind, die die einzustellenden Werte angeben.

5. Medizinisches Gerät nach einem der vorhergehenden Ansprüche,
**dadurch gekennzeichnet,**
**dass** die die Bedienfläche (22) bildende Abdeckung (20) derart ausgebildet und/oder angebracht ist, dass ein Transport von Feuchtigkeit vom Bedienmittel (11) zum Sensor (19) nicht möglich ist.

6. Medizinisches Gerät nach einem der vorhergehenden Ansprüche,
**dadurch gekennzeichnet,**
**dass** das mindestens eine Bedienelement (3, 4, 5) eine punkt-, linien-, oder kreisförmige Bedienfläche (22) aufweist, die auf einem Bedienfeld (2) zur Eingabe von Durchflussmengen und/oder Durchflussstärken für Medikamente oder Spülflüssigkeiten oder zur Eingabe von anderen medizinischen Parametern angebracht ist.

7. Verfahren zur Eingabe von Werten an einem medizinischen Gerät (1), mit einem medizinischen Gerät und mindestens einem Bedienelement zur Eingabe von Werten, mit einem berührungsempfindlichen Sensor (19) und einer Bedienfläche (22),
wobei der Sensor (19) die An- oder Abwesenheit eines Bedienmittels (11) detektiert und einen Kontaktwert (17) generiert,
wobei ein aktueller Wert (16) angezeigt und mittels des Kontaktwerts (17) des Sensors (19) auf einen einzustellenden Wert (15) verändert wird, **dadurch gekennzeichnet,**
**dass** der aktuelle Wert (16) kontinuierlich durch Berührung der Bedienfläche (22) an einer beliebigen Stelle in Richtung des Kontaktwerts (17) verändert wird, bis der aktuelle Wert (16) den Kontaktwert (17) erreicht hat oder bis der Kontaktwert (17) durch Abwesenheit des Bedienmittels (11) zurückgesetzt wird, oder
wobei der aktuelle Wert (16) kontinuierlich durch Streichen des Bedienmittels (11) über die Bedienfläche (22) in eine Stellrichtung (R) verändert wird, bis der Kontaktwert (17) durch Abwesenheit des Bedienmittels (11) zurückgesetzt wird, unabhängig von der Position des Bedienmittels (11) beim Beginn des Streichens.

8. Verfahren nach Anspruch 7,
**dadurch gekennzeichnet,**
**dass** der Kontaktwert (17) durch Antippen oder Berühren des einzustellenden Werts (15) auf der Bedienfläche (22) generiert und der aktuelle Wert (16) unmittelbar auf den einzustellenden Wert (15) gesetzt wird.

9. Verfahren nach einem der Ansprüche 7-8,
**dadurch gekennzeichnet,**
**dass** bei Beschleunigung der Streichbewegung des Bedienmittels (11) die Veränderungsgeschwindigkeit des aktuellen Werts (16) verändert wird.

10. Verfahren nach einem der Ansprüche 7-9,
**dadurch gekennzeichnet,**
**dass** der aktuelle Wert (16) kontinuierlich oder schrittweise mittels einer Anzeige (14) angezeigt und unabhängig von der Stelle der An- oder Abwesenheit des Bedienmittels (11) veränderbar ist.

11. Dentalmedizinisches Gerät nach einem der Ansprüche 1 - 6, das mit einem mindestens drei Bedienelemente aufweisenden Bedienfeld (2) ausgestattet ist, die mittels des Verfahrens nach einem der Ansprüche 7 bis 10 einstellbar sind.

12. Dentalmedizinisches Gerät nach Anspruch 11,
**dadurch gekennzeichnet,**
**dass** das Bedienfeld (2) eine geschlossene, insbesondere wasserdichte Fläche bildet, in der die Bedienflächen (22) durch Absenkungen gebildet sind.

## Claims

1. A medical apparatus having at least one operating element for inputting values, having a touch-sensitive sensor (19) and an operating surface (22), wherein the sensor (19) is mounted below a cover (20) forming the operating surface (22), detects the presence or absence of an operating means (11), and generates a contact value (17), wherein a display (14) of the operating element displays a current value (16) which may be changed by means of the contact value (17) of the sensor (19) to a value (15) to be set, **characterised in that** the medical apparatus either varies the current value (16) continuously by touching the operating surface (22) at any point in the direction of the contact value (17) until the current value (16) has reached the contact value (17) or until the contact value (17) is reset by the absence of the operating means (11),
or
varies the current value (16) continuously by brushing the operating means (11) over the operating surface (22) in an adjustment direction (R) until the contact value (17) is reset by the absence of the operating means (11), independently of the position of the operating means (11) when the brushing is started.

2. The medical apparatus according to Claim 1, **characterised in that** the touch-sensitive sensor (19) is a capacitive sensor, which is mounted below a dielectric cover (20), and **in that** the operating means (11) is a human finger.

3. The medical apparatus according to any of Claims 1 or 2, **characterised in that** the operating surface (22) is in the form of a dot, a line or a circle.

4. The medical apparatus according to any of the preceding claims, **characterised in that** the display (14) displays the current value (16) continuously even during setting, and/or **in that** markings (21) are provided on or next to the operating surface (22) and indicate the values to be set.

5. The medical apparatus according to any of the preceding claims, **characterised in that** the cover (20) forming the operating surface (22) is formed and/or mounted such that a transport of moisture from the operating means (11) to the sensor (19) is not possible.

6. The medical apparatus according to any of the preceding claims, **characterised in that** the at least one operating element (3, 4, 5) comprises an operating surface (22) in the form of a dot, line or circle, which is mounted on an operating panel (2) for inputting flow rates and/or flow intensities for medicaments or flushing liquids or for inputting other medicinal parameters.

7. A method for inputting values on a medical apparatus (1), comprising a medical apparatus and at least one operating element for inputting values, comprising a touch-sensitive sensor (19) and an operating surface (22),
wherein the sensor (19) detects the presence or absence of an operating means (11) and generates a contact value (17),
wherein a current value (16) is displayed and is varied by means of the contact value (17) of the sensor (19) to a value (15) to be set,
**characterised in that**
the current value (16) is varied continuously by touching the operating surface (22) at any point in the direction of the contact value (17) until the current value (16) has reached the contact value (17) or until the contact value (17) is reset by the absence of the operating means (11), or
wherein the current value (16) is varied continuously by brushing the operating means (11) over the operating surface (22) in an adjustment direction (R) until the contact value (17) is reset by the absence of the operating means (11), independently of the position of the operating means (11) when the brushing is started.

8. The method according to Claim 7, **characterised in that** the contact value (17) is generated by tapping or touching the value (15) to be set on the operating surface (22) and the current value (16) is set immediately to the value (15) to be set.

9. The method according to any of Claims 7-8, **characterised in that** upon acceleration of the brushing movement of the operating means (11), the rate of change of the current value (16) is varied.

10. The method according to any of Claims 7-9, **characterised in that** the current value (16) is displayed continuously or step-wise by means of a display (14) and is variable independently of the point of presence or absence of the operating means (11).

11. A dental apparatus according to any of Claims 1-6, which is equipped with an operating panel (2) having at least three operating elements, which can be set by means of the method according to any of Claims 7 to 10.

12. The dental apparatus according to Claim 11, **characterised in that** the operating panel (2) forms a closed, in particular watertight surface, in which the operating surfaces (22) are formed by lowerings.

## Revendications

1. Appareil médical comprenant au moins un élément de commande pour la saisie de valeurs, comprenant un capteur (19) sensible au toucher, et une surface de commande (22), dans lequel le capteur (19) est logé au-dessous d'un recouvrement (20) qui forme la surface de commande (22), qui détecte la présence ou l'absence d'un moyen de commande (11), et qui génère une valeur de contact (17), dans lequel un affichage (14) de l'élément de commande affiche une valeur actuelle (16) qui est modifiable au moyen de la valeur de contact (17) du capteur (19) jusqu'à une valeur (15) à régler, **caractérisé en ce que** l'appareil médical
modifie la valeur actuelle (16) en continu par toucher de la surface de commande (22) à un emplacement quelconque en direction de la valeur de contact (17) jusqu'à ce que la valeur actuelle (16) ait atteint la valeur de contact (17), ou bien jusqu'à ce que la valeur de contact (17) soit remise à zéro par absence du moyen de commande (11),
ou bien
modifie la valeur actuelle (16) en continu par toucher glissant du moyen de commande (11) sur la surface de commande (22) dans une direction de réglage (R) jusqu'à ce que la valeur de contact (17) soit remise à zéro par absence du moyen de commande (11), indépendamment de la position du moyen de commande (11) au commencement du toucher glissant.

2. Appareil médical selon la revendication 1, **caractérisé en ce que** le capteur sensible au toucher (19) est un capteur capacitif, qui est logé au-dessous d'un recouvrement diélectrique (20), et **en ce que** le moyen de commande (11) est un doigt humain.

3. Appareil médical selon l'une des revendications 1 ou 2,
**caractérisé en ce que** la surface de commande (22) est réalisée sous forme ponctuelle, sous forme linéaire ou sous forme circulaire.

4. Appareil médical selon l'une des revendications précédentes, **caractérisé en ce que** l'affichage (14) affiche la valeur actuelle (16) en continu également pendant le réglage, et/ou **en ce que** des marques (21) sont apposées sur ou à côté de la surface de commande (22), qui indiquent les valeurs à régler.

5. Appareil médical selon l'une des revendications précédentes,
**caractérisé en ce que** le recouvrement (20) qui forme la surface de commande (22) est réalisé et/ou appliqué de telle façon qu'un transport d'humidité depuis le moyen de commande (11) vers le capteur (19) n'est pas possible.

6. Appareil médical selon l'une des revendications précédentes,
**caractérisé en ce que** ledit au moins un élément de commande (3, 4, 5) comporte une surface de commande de forme ponctuelle, de forme linéaire ou de forme circulaire (22) qui est apposée sur un champ de commande (2) pour la saisie de quantité et/ou de débit pour des médicaments ou des liquides de rinçage, ou pour la saisie d'autres paramètres médicaux.

7. Procédé pour la saisie de valeurs sur un appareil médical (1), avec un appareil médical et au moins un élément de commande pour la saisie de valeur, avec un capteur sensible au toucher (19) et une surface de commande (22),
dans lequel le capteur (19) détecte la présence ou l'absence d'un moyen de commande (11) et génère une valeur de contact (17),
dans lequel une valeur actuelle (16) est affichée et est modifiée au moyen de la valeur de contact (17) du capteur (19) jusqu'à une valeur à régler (15),
**caractérisé en ce que**
la valeur actuelle (16) est modifiée en continu par toucher de la surface de commande (22) à un emplacement quelconque en direction de la valeur de contact (17), jusqu'à ce que la valeur actuelle (16) ait atteint la valeur de contact (17) ou jusqu'à ce que la valeur de contact (17) soit remise à zéro par absence du moyen de commande (11),
ou bien
la valeur actuelle (16) est modifiée en continu par toucher glissant du moyen de commande (11) sur la surface de commande (22) dans une direction de réglage (R) jusqu'à ce que la valeur de contact (17) soit remise à zéro par absence du moyen de commande (11), indépendamment de la position du moyen de commande (11) au commencement du toucher glissant.

8. Procédé selon la revendication 7,
**caractérisé en ce que** la valeur de contact (17) est généré par un toucher bref ou prolongé de la valeur à régler (15) sur la surface de commande (22) et la valeur actuelle (16) est amenée directement à la valeur à régler (15).

9. Procédé selon l'une des revendications 7 à 8,
**caractérisé en ce que**, en cas d'accélération du mouvement glissant du moyen de commande (11), la vitesse de variation de la valeur actuelle (16) est modifiée.

10. Procédé selon l'une des revendications 7 à 9,
**caractérisé en ce que** la valeur actuelle (16) est affichée en continu ou pas à pas au moyen d'un affichage (14), et est modifiable indépendamment de l'emplacement de la présence de l'absence du moyen de commande (11).

11. Appareil médical dentaire selon l'une des revendications 1 à 6, qui est équipé d'un champ de commande (2) présentant au moins trois éléments de commande, qui sont réglables au moyen du procédé selon l'une des revendications 7 à 10.

12. Appareil médical dentaire selon la revendication 11,
**caractérisé en ce que** le champ de commande (2) forme une surface fermée, en particulier étanche à l'eau, dans laquelle les surfaces de commande (2) sont formées par des renfoncements.
